# EUROPÄISCHE PATENTANMELDUNG

(11) **EP 1 920 661 A1**
(43) Veröffentlichungstag der Anmeldung: **14.05.2008**
(21) Anmeldenummer: 07018422.1
(22) Anmeldetag: 19.09.2007
(51) Int. Cl.: A23D 7/02, A23D 7/04, A23D 9/02, A23D 9/04

(54) **Vorrichtung und Verfahren zum Verarbeiten von Speisefetten**

(30) Priorität: 29.09.2006 DE 102006046636
(71) Anmelder: Oeko-Service Luxembourg S.A., 7737 Colmar-Berg (LU)
(72) Erfinder: Schu, Klaus, Dr., 9161 Ingeldorf (LU)
(74) Vertreter: Vièl, Christof

(57) **Zusammenfassung**

Die Erfindung betrifft eine Vorrichtung und ein Verfahren zum Verarbeiten von Speisefetten.

Um eine Vorrichtung und ein Verfahren zum Verarbeiten von Speisefetten zu schaffen, die ein Nutzen dieser Speisefette als Energieträger ermöglichen, wird im Rahmen der Erfindung vorgeschlagen, daß Mittel zum Vorwärmen des Speisefetts vorgesehen sind, daß Mittel zum Verflüssigen der Speisefette vorgesehen sind und daß Mittel zum Reinigen der Speisefettbehälter vorgesehen sind.

Hierdurch wird es zum einen möglich, die Speisefettbehälter zum Transport des Speisefetts im Kreislauf zu fuhren, wobei den Haushalten bzw. den gewerblichen Nutzern saubere Behälter (z.B. Eimer mit Deckeln) zur Verfügung gestellt werden, die diese gefüllt zu einer Annahmestelle zurückbringen und andererseits das Speisefett energetisch zu nutzen. Als weiterer Vorteil ergibt sich die Entlastung der Umwelt.

## Beschreibung

Die Erfindung betrifft eine Vorrichtung und ein Verfahren zum Verarbeiten von Speisefetten.

Sowohl in Haushalten als auch im Gastronomiegewerbe und in der Lebensmittelindustrie fallen Speisefette in großen Mengen an. Hinzu kommen sonstige Abfallfette und -öle aus diesen Bereichen, die ebenfalls als Speisefette bezeichnet werden, z.B. Öle, Butter oder Margarine, deren Haltbarkeitsdatum abgelaufen ist. Die Entsorgung derartiger Speisefette über die Kanalisation kann zum einen letztere verstopfen und führt zum anderen zu einer starken Belastung der Kläranlagen. Hinzu kommt, daß Speisefette als Energieträger durchaus von Interesse sind.

Aufgabe der Erfindung ist es daher, eine Vorrichtung und ein Verfahren zum Verarbeiten von Speisefetten zu schaffen, die ein Nutzen dieser Speisefette als Energieträger ermöglichen.

Diese Aufgabe wird erfindungsgemäß bei einer Vorrichtung zum Verarbeiten von Speisefetten dadurch gelöst, daß Mittel zum Vorwärmen des Speisefetts vorgesehen sind, daß Mittel zum Verflüssigen der Speisefette vorgesehen sind und daß Mittel zum Reinigen der Speisefettbehälter vorgesehen sind.

Hierdurch wird es zum einen möglich, die Speisefettbehälter zum Transport des Speisefetts im Kreislauf zu führen, wobei den Haushalten bzw. den gewerblichen Nutzern saubere Behälter (z.B. Eimer mit Deckeln) zur Verfügung gestellt werden, die diese gefüllt zu einer Annahmestelle zurückbringen und andererseits das Speisefett energetisch zu nutzen. Als weiterer Vorteil ergibt sich die Entlastung der Umwelt.

Eine Ausbildung der Erfindung besteht darin, daß die Mittel zum Vorwärmen des in Speisefettbehältern angelieferten Speisefetts als Wasserbad mit Behälterhalterungen ausgebildet sind, in dem das in Speisefettbehältern befindliche Speisefett vorwärmbar ist.

Da das Speisefett während des Transportes und der Lagerung in den Speisefettbehältern erstarrt, ist es erforderlich, dieses zunächst vorzuwärmen, bis im Bereich der Behälterwand ein Gleitfilm entsteht, der ein Entleeren der Speisefettbehälter ermöglicht. Eine komplette Verflüssigung der Speisefette ist hierzu nicht erforderlich.

Es ist zweckmäßig, daß die Mittel zum Vorwärmen des Speisefetts als Speisefettaufwärmkarrusell ausgebildet sind, wobei die Behälterhalterungen kreisförmig relativ zu dem Wasserbad bewegbar sind.

Durch diese Relativbewegung wird eine im Wesentlichen homogene Badtemperatur erreicht und der kreisförmige Aufbau ist zudem platzsparend. Bei einer Temperatur des Wasserbades von ca. 50 °C ist es ausreichend, die Speisefettbehälter ca. 1 bis 5 Minuten in dem Wasserbad zu belassen. Dementsprechend kann die Umlaufgeschwindigkeit des Speisefettaufwärmkarussells so eingestellt werden, daß ein Umlauf genügt, um eine ausreichende Vorwärmung zu erreichen.

Eine Weiterbildung der Erfindung besteht darin, daß die Mittel zum Verflüssigen der Speisefette als Fettschmelzkessel ausgebildet sind, der im Ablauf mit Sieben zum Abtrennen der Feststofffraktion in dem Speisefett und einer Heizvorrichtung zum Verflüssigen der Speisefette sowie einer Pumpleitung zum Abpumpen der verflüssigten Speisefctte versehen ist.

In dem Fettschmelzkessel werden die Speisefette im Wesentlichen von Rückständcn befreit, verflüssigt und in flüssiger Form dann durch die Pumpleitung (welche gegebenenfalls beheizbar ist) in einen Sammelbehälter oder direkt in einen Tankauflieger gepumpt. Die Speisefette können dann durch Veresterung in Altfettmethylester (Biodiesel) umgewandelt werden, um dann als Treib- oder Brennstoff zu dienen. Es ist zweckmäßig, daß die Siebe zum Abtrennen der Feststofffraktion zum Reinigen entnehmbar sind.

Weiterhin liegt es im Rahmen der Erfindung, daß die Mittel zum Reinigen der Speisefettbehälter eine Vorwäsche, eine Hauptwäsche und eine Klarspülung sowie eine Trocknung umfassen.

Es ist auch erforderlich, die Speisefettbehälter nach dem Entleeren zu reinigen, um sie den Verbrauchern wieder zur Verfügung zu stellen. Es hat sich als zweckmäßig erwiesen, dies in drei Waschgängen sowie einem Trockengang durchzuführen.

Hierbei ist es von Relevanz, daß die Vorwäsche einen eigenen Wasserkreislauf aufweist, der einen Heißwasserzulauf und einen Fettabscheider umfaßt.

In der Vorwäsche wird naturgemäß der größte Teil der Speisefette aus den Behältern entfernt. Es ist daher sinnvoll, diese mit einem eigenen Wasserkreislauf zu versehen und insbesondere das Abwasser der Vorwäsche über einen Fettabscheider zu führen, um das in der Vorwäsche ausgetragene Fett zurückzugewinnen. In dem Fettabscheider erfolgt eine Trennung in Wasser, verbleibende Feststoffe und Fett. Die rückgewonnenen Fette gehen dabei wieder in den Fettschmelzkessel zurück, die Feststoffe werden ordnungsgemäß entsorgt und das Wasser wird dem Abwassersystem zugeführt.

In diesem Zusammenhang ist es zweckmäßig, daß weiterhin ein Dekanter und/oder ein Wärmetauscher in dem Wasserkreislauf vorgesehen sind.

Der Dekantcr ermöglicht eine weitergehende Reinigung des Abwassers. Über den Wärmetauscher kann die Restwärme des Abwassers, dessen Temperatur im Ablauf noch ca. 45 °C beträgt, zum Vorwärmen des Frischwassers, das mit ca. 80 bis 90 °C in die Vorwäsche eintritt, verwendet werden.

Weiterhin ist es vorteilhaft, daß das Abwasser aus der Klarspülung in die Hauptwäsche leitbar ist.

Da das Abwasser aus der Klarspülung kaum verunreinigt ist, kann es in die Hauptwäsche geführt werden, was zum einen den Frischwasserverbrauch reduziert und zum anderen energetisch sinnvoll ist, da das Abwasser bereits vorgewärmt ist.

Besonders sinnvoll ist, daß die Mittel zum Reinigen der Speisefettbehälter mit Regenwasser betreibbar sind.

Da die Vorrichtung in der Regel in einer Halle betrieben wird, kann das auf dem Hallendach in relativ großen Mengen anfallende Regenwasser ohne großen Aufwand gesammelt und zum Reinigen der Behälter verwendet werden.

Im Rahmen der Erfindung liegt auch ein Verfahren zum Verarbeiten von Speisefetten, wobei die in Behältern angelieferten Speisefette vorgewärmt werden, daß die Speisefette anschließend von Feststoffen getrennt und verflüssigt werden und daß die Behälter wieder gereinigt werden.

Dies ermöglicht, wie bereits ausgeführt, ein Kreislaufsystem der Behälter und ein Weiterverwerten der energetisch wertvollen Speisefette. Zudem wird die Umwelt entlastet.

Es ist insbesondere vorteilhaft, daß die Speisefette nachfolgend in Biodiesel verestert werden.

Ebenso ist es möglich, daß die Speisefette als Brenn- oder Kraftstoffe verwendet werden.

Nachfolgend wird ein Ausführungsbeispiel einer erfindungsgemäßen Vorrichtung anhand einer Zeichnung beschrieben.

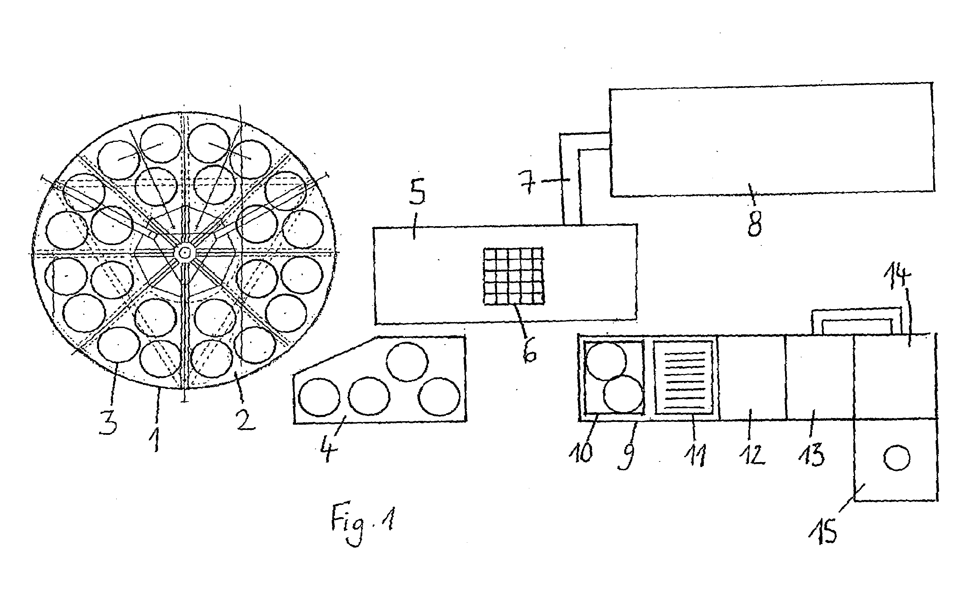

Es zeigt
- Fig. 1: eine schematische Darstellung der erfindungsgemäßen Vorrichtung.

Wie aus Fig. 1 ersichtlich, weist die erfindungsgemäße Vorrichtung Mittel 1 zum Vorwärmen des in Speisefettbehältern 3 befindlichen Speisefetts auf, die als Wasserbad mit Behälterhalterungen 2 ausgebildet sind, in dem das in Speisefettbehältern 3 befindliche Speisefett vorwärmbar ist. Im vorliegenden Beispiel sind diese Mittel 1 zum Vorwärmen des Speisefetts als Speisefettaufwärmkarrusell 1 ausgebildet, wobei die Behälterhalterungen 3 kreisförmig relativ zu dem Wasserbad bewegbar sind. Die Speisefettbehälter 3 werden in die Behälterhalterungen 2 eingesetzt und dann in dem auf ca. 50 °C temperierten Wasserbad vorgewärmt, bis sich im Bereich der Behälterwandungen ein Gleitfilm ausbildet, der ein leichtes und weitgehendes Entleeren der Speisefettbehälter ermöglicht.

Nachfolgend werden die Speisefettbehälter 3 eventuell kurz auf einer Zwischenstation 4 zwischengelagert, bevor sie in Mittel 5 zum Verflüssigen der Speisefette aufgegeben werden. Diese Mittel 5 zum Verflüssigen der Speisefette sind als Fettschmelzkessel 5 ausgebildet, der im Ablauf mit Sieben 6 zum Abtrennen der Feststofffraktion in dem Speisefett und einer Heizvorrichtung zum Verflüssigen der Speisefette sowie einer (eventuell beheizbaren) Pumpleitung 7 zum Abpumpen der verflüssigten Speisefette in einen Vorratsbehälter 8 oder direkt in einen Tankauflieger versehen ist.

Die entleerten Speisefettbehälter 3, bei denen es sich beispielsweise um Kunststoffeimer 3a mit Deckeln 3b handelt, werden in einer Aufgabestation 9 in Körbe 10 einsortiert. Hierbei können beispielsweise die Speisefettbehälter 3a und die dazugehörigen Deckel 3b in getrennte Körbe 10 einsortiert werden. Diese Körbe 10 durchlaufen dann die Mittel 11 zum Reinigen der Speisefettbehälter. Diese sind als eine Art Spülmaschine mit einer Vorwäsche 12, einer Hauptwäsche 13 und einer Klarspülung 14 sowie einer Trocknung 15 ausgebildet.

Hierbei ist es zwar sinnvoll, daß das Abwasser aus der Klarspülung 14 in die Hauptwäsche 13 leitbar ist, um Wasser und Energie zum Aufheizen desselben zu sparen, es hat sich jedoch als bedeutend herausgestellt, daß die Vorwäsche 12 einen eigenen Wasserkreislauf aufweist, der einen Heißwasserzulauf und einen Fettabscheider sowie vorzugsweise weiterhin einen Dekanter und einen Wärmetauscher umfaßt.

Es ist vorteilhaft, die Mittel 11 zum Reinigen der Speisefettbehälter 3 mit Regenwasser zu betreiben. Das Aufheizen des Wassers auf die jeweils erforderliche Temperatur von ca. 80 bis 90 °C (Zulauf Vorwäsche 12 und Zulauf Hauptwäsche 13) bzw, 50 °C (Mittel 1 zum Vorwärmen) kann in vorteilhafter Weise mit dem aus den Speisefetten gewonnenen Biodiesel erfolgen.

Alternativ können die gewonnenen Speisefette - ggf. nach einem weiteren Reinigungsprozeß (Dekanter, Feinstfilter) - auch direkt als Kraftstoff in Verbrennungsmotoren eingesetzt werden.

## Patentansprüche

1. Vorrichtung zum Verarbeiten von Speisefetten, **dadurch gekennzeichnet, daß** Mittel (1) zum Vorwännen des Speisefetts vorgesehen sind, daß Mittel (5) zum Verflüssigen der Speisefette vorgesehen sind und daß Mittel (11) zum Reinigen der Speisefettbehälter (3) vorgesehen sind.

2. Vorrichtung gemäß Anspruch 1, **dadurch gekennzeichnet, daß** die Mittel (1) zum Vorwärmen des in Speisefettbehältern (3) angelieferten Speisefetts als Wasserbad mit Behälterhalterungen (2) ausgebildet sind, in dem das in Speisefettbehältern (3) befindliche Speisefett vorwärmbar ist.

3. Vorrichtung gemäß Anspruch 2, **dadurch gekennzeichnet, daß** die Mittel (1) zum Vorwärmen des Speisefetts als Speisefettaufwärmkarrusell (1) ausgebildet sind, wobei die Behälterhalterungen (2) kreisförmig relativ zu dem Wasserbad bewegbar sind.

4. Vorrichtung gemäß Anspruch 1, **dadurch gekennzeichnet, daß** die Mittel (5) zum Verflüssigen der Speisefette als Fettschmelzkessel (5) ausgebildet sind, der im Ablauf mit Sieben (6) zum Abtrennen der Feststofffraktion in dem Speisefett und einer Heizvorrichtung zum Verflüssigen der Speisefette sowie einer Pumpleitung (7) zum Abpumpen der verflüssigten Speisefette versehen ist.

5. Vorrichtung gemäß Anspruch 1, **dadurch gekennzeichnet, daß** die Mittel (11) zum Reinigen der Speisefettbehälter (3) eine Vorwäsche (12), eine Hauptwäsche (13) und eine Klarspülung (14) sowie eine Trocknung (15) umfassen.

6. Vorrichtung gemäß Anspruch 1, **dadurch gekennzeichnet, daß** die Vorwäsche (12) einen eigenen Wasserkreislauf aufweist, der einen Heißwasserzulauf und einen Fettabscheider umfaßt.

7. Vorrichtung gemäß Anspruch 6, **dadurch gekennzeichnet, daß** weiterhin ein Dekanter und ein Wärmetauscher in dem Wasserkreislauf vorgesehen sind.

8. Vorrichtung gemäß Anspruch 5, **dadurch gekennzeichnet, daß** das Abwasser aus der Klarspülung (14) in die Hauptwäsche (13) leitbar ist.

9. Vorrichtung gemäß Anspruch 5, **dadurch gekennzeichnet, daß** die Mittel (11) zum Reinigen der Speisefettbehälter (3) mit Regenwasser betreibbar sind.

10. Verfahren zum Verarbeiten von Speisefetten, **dadurch gekennzeichnet, daß** die in Behältern angelieferten Speisefette vorgewärmt werden, daß die Speisefette anschließend von Feststoffen getrennt und verflüssigt werden und daß die Behälter wieder gereinigt werden.

11. Verfahren gemäß Anspruch 10, **dadurch gekennzeichnet, daß** die Speisefette nachfolgend in Biodiesel verestert werden.

12. Verfahren gemäß Anspruch 10, **dadurch gekennzeichnet, daß** die Speisefette als Brenn- oder Kraftstoffe verwendet werden.
